# FASCICULE DE BREVET EUROPEEN

(11) **EP 3 865 868 B1**
(45) Date de publication et mention de la délivrance du brevet: **20.11.2024**
(21) Numéro de dépôt: 21155918.2
(22) Date de dépôt: 09.02.2021
(51) Int. Cl.: G01N 29/04, G01N 29/26

(54) **DISPOSITIF D'EXAMEN DE L'INTERIEUR D'UNE CONDUITE PAR ULTRASON MULTI-ELEMENT**
VORRICHTUNG ZUR ÜBERPRÜFUNG DES INNEREN EINES ROHRS MITTELS MULTIELEMENT-ULTRASCHALL
DEVICE FOR EXAMINATION OF THE INSIDE OF A PIPE BY MULTI-ELEMENT ULTRASOUND

(30) Priorité: 17.02.2020 FR 2001536
(43) Date de publication de la demande: 18.08.2021
(73) Titulaire: Société des Transports Pétroliers par Pipeline Trapil, 92800 Puteaux (FR)
(72) Inventeur: RADISSON, Marc, 95390 Saint-Prix (FR); BENICHOU, Stéphane, 94500 Villiers Le Bel (FR)
(74) Mandataire: Hirsch & Associés

(56) Documents cités:
- EP-A2- 1 333 277
- WO-A1-2019/195329
- CN-A- 104 515 807
- CN-A- 110 618 197
- GB-A- 2 020 023
- US-A1- 2008 133 200
- US-A1- 2014 177 388

## Description

La présente invention concerne un dispositif d'examen de l'intérieur d'une conduite utilisant la technologie ultrason multi-élément. Elle trouve notamment une application aux dispositifs appelés « racleurs » pour la détection de défauts dans la paroi d'une conduite tubulaire ou la vérification des caractéristiques de la paroi d'une conduite tubulaire.

Un tel dispositif est conçu pour inspecter des conduites tubulaires destinées à transporter un fluide, notamment un liquide de type homogène. Il peut s'agir par exemple d'eau, d'hydrocarbures raffinés ou de certains pétroles bruts.

On connaît par exemple du document EP 1 333 277 un dispositif qui utilise la technologie ultrason multi-élément, dans laquelle un certain nombre de capteurs ultrason permettent l'émission et la réception d'ondes sonores dont les caractéristiques varient en fonction de l'obstacle rencontré, ce qui permet d'en déduire certaines informations relatives aux caractéristiques de la paroi de la conduite. Chaque capteur est formé d'une série d'émetteurs et de récepteurs. L'électronique de contrôle embarquée dans le dispositif permet de réceptionner et enregistrer les informations mesurées par les capteurs.

On connaît aussi les documents suivants: CN110197, CN104515807 et GB2020023. Cependant, de tels dispositifs ne permettent pas de réaliser des inspections de conduite avec un niveau de finesse et de précision suffisant, pour une grande variété de défauts ou caractéristiques à analyser, de façon suffisamment rapide, le tout sous une forme compacte facilitant le déplacement dans la conduite. Or, certaines combinaisons de défauts peuvent présenter une criticité propre pour une conduite, de sorte qu'il est nécessaire de pouvoir paramétrer le dispositif de façon adéquat pour la détection de ces combinaisons de défauts.

Un des buts de l'invention est de résoudre les problèmes précités. Ainsi, l'invention a notamment pour objectif de proposer un dispositif d'examen de l'intérieur d'une conduite par ultrason multi-élément, autonome, particulièrement compact et qui détecte avec rapidité une grande variété de défaut et de combinaisons de défauts. L'invention a ainsi pour objet, selon un premier aspect, un dispositif d'examen de l'intérieur d'une conduite par ultrason multi-élément, consistant en:
a) un dispositif d'examen de l'intérieur d'une conduite par ultrason multi-élément, configuré pour être placé à l'intérieur d'une conduite tubulaire de transport d'un fluide,
b) le dispositif présentant une circonférence et comprenant plusieurs capteurs, à ultrason répartis sur ladite circonférence et chacun formé de plusieurs émetteurs et de plusieurs antennes de réception, le dispositif comprenant également des moyens électroniques de contrôles configurés pour piloter chaque capteur, et pour recevoir et enregistrer les informations mesurées par lesdits capteurs, lesquels capteurs, sont regroupés :
c) un premier groupe de capteurs dont les émetteurs sont aptes à émettre une onde sonore longitudinale dans une première direction d'incidence normale à la circonférence en la position de l'émetteur correspondant,
d) un deuxième groupe de capteurs dont les émetteurs sont aptes à émettre une onde sonore transversale dans une deuxième direction d'incidence formant un angle d'incidence non nul, de préférence sensiblement égal à 45 degrés, avec la normale à la circonférence en la position de l'émetteur correspondant,
e) les moyens électroniques de contrôle configurés :
   e1) pour piloter individuellement chaque capteur, du premier et du deuxième groupe, et chaque émetteur et récepteur de chacun de ces dits capteurs, selon un programme de pilotage paramétrable et fonction des caractéristiques des défauts à détecter dans la paroi et/ou des caractéristiques, de la paroi à vérifier,
   e2) pour appliquer à l'émission et/ou à la réception de chacun des émetteurs et/ou récepteurs:
      e2a) de chaque capteur, du premier et du deuxième groupes, un retard spécifique selon une loi de retard de focalisation paramétrable, en sorte de faire varier électroniquement et de manière spécifique à chaque capteur, la distance de focalisation du faisceau d'ondes, émis par ledit capteur,
      e2b) de chaque capteur du deuxième groupe un retard spécifique selon une loi de retard de déflexion paramétrable, en sorte de faire varier électroniquement et de manière spécifique à chaque capteur l'angle d'incidence du faisceau d'ondes émis par ledit capteur,
   caractérisé en ce que:
      f1) le dispositif est configuré pour se déplacer sous l'action du fluide transporté dans ladite conduite pour détecter des défauts à de la paroi de ladite conduite,
      f2) les moyens électroniques de contrôle sont configurés pour faire varier le nombre d'émetteurs et de récepteurs utilisés dans un capteur (3,4) donné, en sorte de faire varier la taille de la tâche focale du faisceau d'onde, projeté par le capteur, donné à une distance focale donnée.
et en ce que le dispositif comprend :
g) une horloge de fréquence paramétrable, et en ce que les moyens électroniques de contrôle sont configurés pour déclencher les mesures par les capteurs, à ultrason selon ladite fréquence ;
h) au moins un capteur de type odomètre axial, et en ce que les moyens électroniques de contrôle sont configurés pour associer les informations obtenues par les capteurs, à ultrason aux informations de position obtenues par le ou les capteurs de type odomètre axial ;
i) le pas de mesure de position par le ou les capteurs de type odomètre axial est paramétrable, et les moyens électroniques de contrôle sont configurés pour déclencher les mesures par les capteurs, à ultrason selon ledit pas de mesure,
j) au moins un capteur de mesure de la célérité de propagation des faisceaux d'ondes, ultrasonores émises par les capteurs, ultrason ou des ondes ultrasonores émises par les émetteurs des capteurs ultrason, et les moyens de contrôle sont configurés pour recevoir et enregistrer l'information mesurée par ledit capteur de mesure de la célérité de propagation ;
k) un transmetteur électromagnétique basse fréquence apte, lorsque le dispositif est placé à l'intérieur d'une conduite, à transmettre à la surface extérieure de ladite conduite des ondes, afin de permettre le suivi et la détection du dispositif dans la conduite depuis l'extérieur de cette conduite.

Selon un mode de réalisation de l'invention, les capteurs du premier groupe sont répartis circonférentiellement sur une ou plusieurs, de préférence deux, rangées, et les moyens électroniques de contrôle sont configurés pour permettre le balayage électronique par les faisceaux d'ondes émis par l'ensemble des rangées de capteurs du premier groupe.

Selon un autre mode de réalisation de l'invention, les capteurs du deuxième groupe sont répartis circonférentiellement sur une ou plusieurs, de préférence trois, rangées, et les moyens électroniques de contrôle sont configurés pour permettre le balayage électronique par les faisceaux d'ondes émis par l'ensemble des rangées de capteurs du deuxième groupe.

Selon encore un mode de réalisation de l'invention, les capteurs, sont pourvus d'ouvertures actives en regard de leurs émetteurs, et les moyens électroniques de contrôle sont configurés pour activer séquentiellement les ouvertures des capteurs, d'une rangée donnée, pour permettre le balayage électronique.

Selon un mode de réalisation encore de l'invention, les moyens électroniques de contrôle sont configurés pour permettre le balayage électronique par les faisceaux d'ondes, émis par l'ensemble des rangées de capteurs, selon un pas de commutation déterminé.

Selon un mode de réalisation de l'invention encore, les moyens électroniques de contrôle sont configurés pour activer séquentiellement les ouvertures des capteurs, d'une rangée donnée selon le pas de commutation déterminé, pour permettre le balayage électronique selon une résolution circonférentielle de balayage correspondant audit pas de commutation déterminé.

Selon un autre mode de réalisation encore de l'invention sont présents des moyens de centrage, aptes à assurer le centrage du dispositif dans une conduite.

Selon l'invention, un dispositif d'examen de l'intérieur d'une conduite par ultrason multi-élément, est configuré pour être placé à l'intérieur d'une conduite tubulaire de transport d'un fluide et pour se déplacer sous l'action du fluide transporté dans ladite conduite pour détecter des défauts dans, ou vérifier des caractéristiques de, la paroi de ladite conduite, le dispositif présentant une circonférence et comprenant plusieurs capteurs à ultrason répartis sur ladite circonférence et chacun formé de plusieurs émetteurs et de plusieurs antennes de réception, le dispositif comprenant également des moyens électroniques de contrôles configurés pour piloter chaque capteur, et pour recevoir et enregistrer les informations mesurées par lesdits capteurs.

Les capteurs sont regroupés en un premier groupe de capteurs dont les émetteurs sont aptes à émettre une onde sonore longitudinale dans une première direction d'incidence normale à la circonférence en la position de l'émetteur correspondant, et un deuxième groupe de capteurs dont les émetteurs sont aptes à émettre une onde sonore transversale dans une deuxième direction d'incidence formant un angle d'incidence non nul, de préférence sensiblement égal à 45 degrés, avec la normale à la circonférence en la position de l'émetteur correspondant.

Les moyens électroniques de contrôle sont configurés pour piloter individuellement chaque capteur du premier et du deuxième groupe, et chaque émetteur et récepteur de chacun de ces dits capteur, selon un programme de pilotage paramétrable et fonction des caractéristiques des défauts à détecter dans la paroi et/ou des caractéristiques de la paroi à vérifier.

Suivant certains modes de réalisation, le dispositif comprend en outre une ou plusieurs des caractéristiques suivantes, prise(s) isolément ou suivant toutes les combinaisons techniquement possibles :
- les capteurs du premier groupe sont répartis circonférentiellement sur une ou plusieurs, de préférence deux, rangées, et les moyens électroniques de contrôle sont configurés pour permettre le balayage électronique par les faisceaux d'ondes émis par l'ensemble des rangées de capteurs du premier groupe;
- les capteurs du deuxième groupe sont répartis circonférentiellement sur une ou plusieurs, de préférence trois, rangées, et les moyens électroniques de contrôle sont configurés pour permettre le balayage électronique par les faisceaux d'ondes émis par l'ensemble des rangées de capteurs du deuxième groupe.

Ainsi, le dispositif de l'invention permet d'examiner l'intérieur d'une conduite en détectant avec rapidité une grande variété de défaut et de combinaisons de défauts, et en vérifiant certaines caractéristiques géométriques d'une conduite, et permet également une inspection complète du volume d'une zone de soudure.

Les caractéristiques et avantages de l'invention apparaitront à la lecture de la description qui va suivre, donnée uniquement à titre d'exemple, et non limitative, en référence aux figures annexées suivantes :
- [Fig. 1] : représentation schématique d'un exemple de dispositif de l'invention;
- [Fig. 2] : représentation schématique d'un exemple de vérification de caractéristiques de la paroi d'une conduite par le dispositif de l'invention;
- [Fig. 3] : représentation schématique d'un exemple de détection de défauts dans la paroi d'une conduite par le dispositif de l'invention;
- [Fig. 4] : représentation schématique d'un exemple de volume de soudure au niveau de la paroi d'une conduite analysable par le dispositif de l'invention;
- [Fig. 5] : représentation schématique d'un exemple de détection de défauts dans la paroi d'une conduite par le dispositif de l'invention avec un pas de commutation donné;
- [Fig. 6] : représentation schématique d'un exemple de détection de défauts dans la paroi d'une conduite par le dispositif de l'invention avec un autre pas de commutation donné.

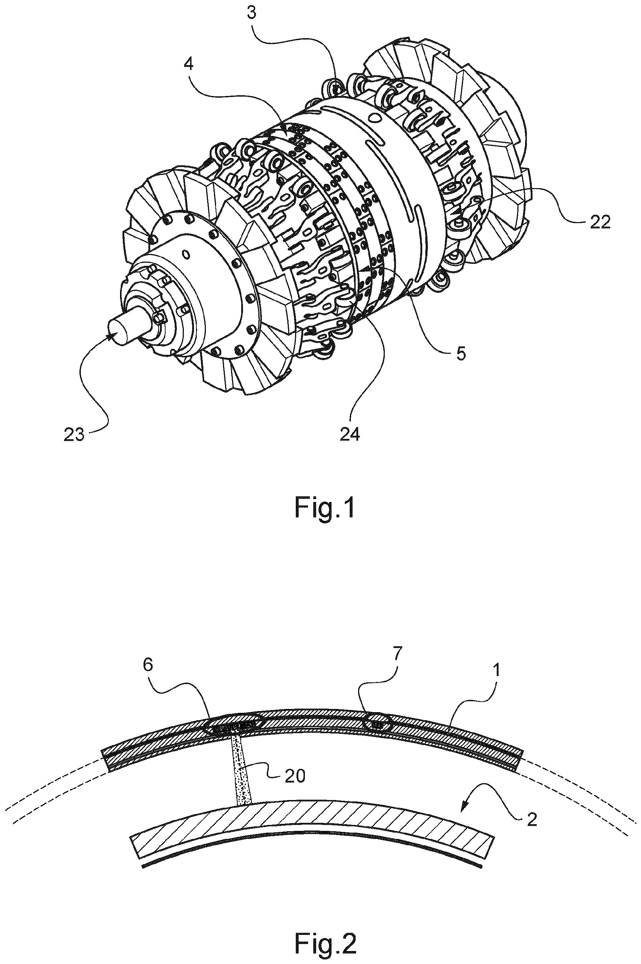

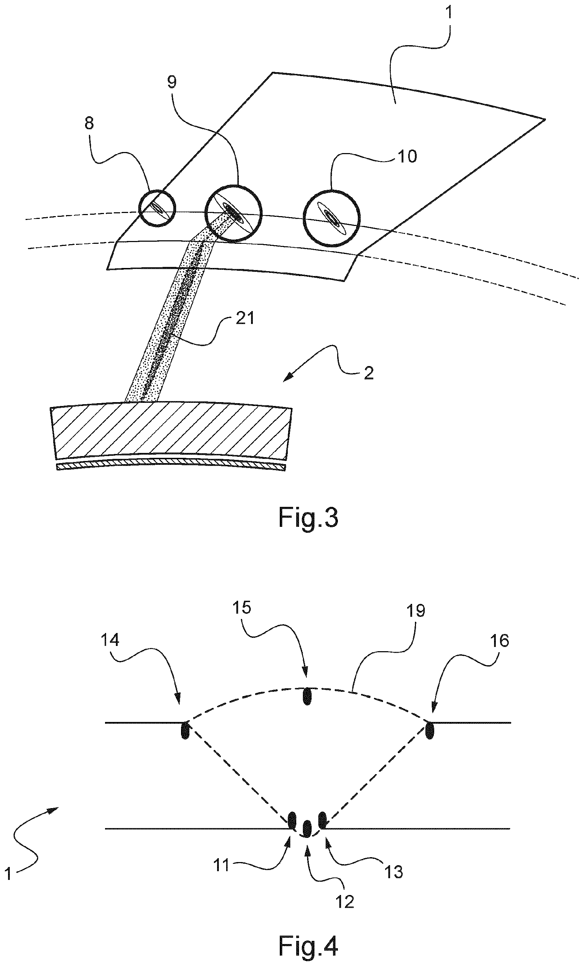

La figure 1 montre un exemple de dispositif d'examen de l'intérieur d'une conduite par ultrason multi-élément, selon l'invention. Ce dispositif est destiné à être placé l'intérieur d'une conduite tubulaire de transport d'un fluide. Il se déplace dans la conduite sous l'action du fluide transporté, pour détecter des défauts 8 à 18 dans la paroi 1 de cette conduite, tel qu'illustré dans des exemples aux figures 3 à 6, ou vérifier les caractéristiques 6, 7 de la paroi 1 de cette conduite tel qu'illustré à la figure 2.

Le dispositif présente une circonférence 2. Plusieurs capteurs 3, 4 à ultrason sont répartis sur cette circonférence 2. De façon classique, chacun des capteurs 3, 4 est formé de plusieurs émetteurs et de plusieurs récepteurs ou antennes de réception, non visibles sur les figures.

Le dispositif comprenant par ailleurs des moyens électroniques de contrôles non visibles sur les figures car disposés à l'intérieur, reliés aux différents capteurs et aux différents émetteurs et récepteurs de ces capteurs. Ces moyens électroniques de contrôle sont configurés pour piloter chaque capteur 3, 4, et pour recevoir et enregistrer les informations mesurées par ces capteurs 3, 4.

Ces capteurs 3, 4 sont regroupés en deux groupes. Dans le premier groupe, les émetteurs des capteurs 3 sont aptes à émettre une onde 20 sonore, visible par exemple sur la figure 2. Cette onde sonore 20 est une onde longitudinale dans une première direction d'incidence normale à la circonférence 2 en la position de l'émetteur correspondant. Dans le deuxième groupe, les émetteurs des capteurs 4 sont aptes à émettre une onde sonore 21, visible par exemple sur les figures 3 à 6. Cette onde sonore 21 est une onde transversale dans une deuxième direction d'incidence formant un angle d'incidence non nul, de préférence sensiblement égal à 45 degrés, avec la normale à la circonférence 2 en la position de l'émetteur correspondant.

Les moyens électroniques de contrôle sont configurés pour piloter individuellement chaque capteur 3, 4 du premier et du deuxième groupe, et chaque émetteur et récepteur de chacun de ces capteur 3, 4. Le pilotage est réalisé selon un programme de pilotage paramétrable et fonction des caractéristiques des défauts 8 à 18 à détecter dans la paroi 1, et/ou des caractéristiques 6, 7 de la paroi 1 à vérifier.

Les moyens électroniques de contrôle sont configurés pour appliquer à l'émission et/ou à la réception de chacun des émetteurs et/ou récepteurs de chaque capteur 3, 4 du premier et du deuxième groupes un retard spécifique. L'application de ce retard est réalisée selon une loi de retard de focalisation paramétrable. De la sorte, on peut faire varier électroniquement et de manière spécifique à chaque capteur 3, 4 la distance de focalisation du faisceau d'ondes 20, 21 émis par le capteur 3, 4 en question.

Par ailleurs, les moyens électroniques de contrôle sont configurés pour appliquer à l'émission et/ou à la réception de chacun des émetteurs et/ou récepteurs de chaque capteur 4 du deuxième groupes un autre retard spécifique. L'application de ce retard est réalisée selon une loi de retard de déflexion paramétrable. De la sorte, on peut faire varier électroniquement et de manière spécifique à chaque capteur 4 l'angle d'incidence du faisceau d'ondes 21 émis par ledit capteur 4.

Comme on peut le voir sur la figure 1, les capteurs 3 du premier groupe sont répartis circonférentiellement. Ils peuvent être répartis sur une ou plusieurs rangées. Dans l'exemple de la figure 1, ils sont répartis sur deux rangées. Les moyens électroniques de contrôle sont configurés pour permettre le balayage électronique par les faisceaux d' ondes 20 émis par l'ensemble des rangées de capteurs 3 du premier groupe. Comme on peut également le voir sur la figure 1, les capteurs 4 du deuxième groupe sont aussi répartis circonférentiellement. Ils peuvent être répartis sur une ou plusieurs rangées. Dans l'exemple de la figure 1, ils sont répartis sur trois rangées. Les moyens électroniques de contrôle sont configurés pour permettre le balayage électronique par les faisceaux d'ondes 21 émis par l'ensemble des rangées de capteurs 4 du deuxième groupe.

Un pas de commutation peut être paramétré. Les moyens électroniques de contrôle sont ainsi configurés pour permettre le balayage électronique par les faisceaux d'ondes 20, 21 émis par l'ensemble des rangées de capteurs 3, 4 selon ce pas de commutation paramétré.

Plus précisément, les moyens électroniques de contrôle sont configurés pour activer séquentiellement les ouvertures des capteurs 3, 4 d'une rangée donnée selon le pas de commutation paramétré, pour permettre le balayage électronique selon une résolution circonférentielle de balayage correspondant à ce pas de commutation déterminé.

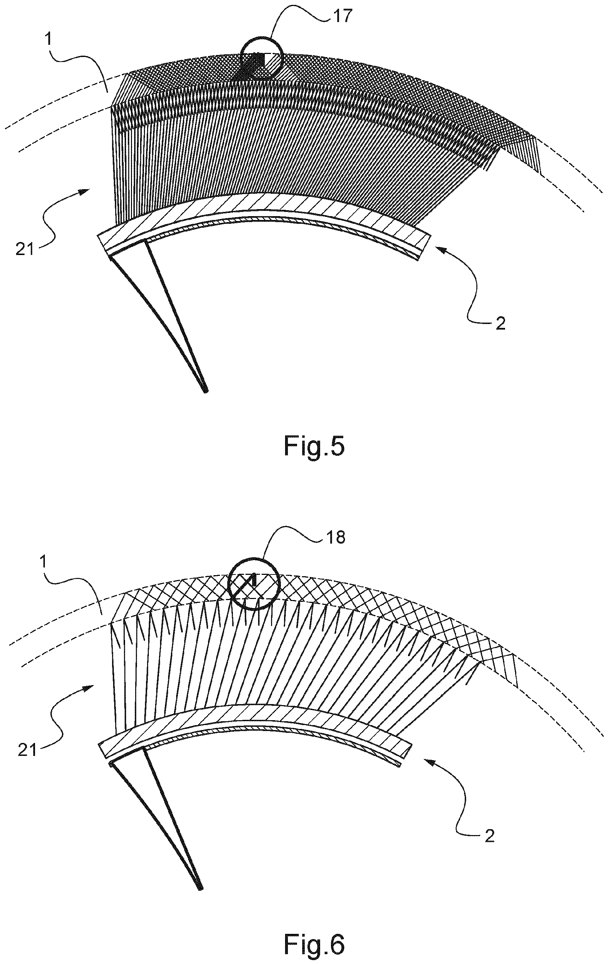

Par exemple, la figure 5 illustre le balayage électronique par les capteurs 4 disposés sur la circonférence 2 du dispositif, pour balayer la paroi 1 d'une conduite dans laquelle existe un défaut 17 de type fissure, présentant un pas de commutation de valeur 1. Ainsi, la figure 6 illustre quant à elle le balayage électronique par les capteurs 4 disposés sur la circonférence 2 du dispositif, pour balayer la paroi 1 d'une conduite dans laquelle existe un défaut 18 de type fissure, selon un pas de commutation de valeur 4.

Ainsi, la résolution circonférentielle de balayage obtenue à la figure 5 est quatre fois plus fine que celle obtenue à la figure 6.

Par ailleurs, les moyens électroniques de contrôle sont configurés pour faire varier le nombre d'émetteurs et de récepteurs utilisés dans un capteur 3, 4 donné, en sorte de faire varier la taille de la tâche focale du faisceau d'onde 20, 21 projeté par le capteur 3, 4 donné à une distance focale donnée.

Ainsi, le dispositif de l'invention est conçu pour inspecter la paroi 1 d'une conduite tubulaire devant notamment transporter des liquides de type homogène (par exemple: eau, hydrocarbures raffinés ou certains pétroles bruts. Ce dispositif permet notamment de détecter, identifier, dimensionner et localiser des défauts 8 à 18 présents dans la paroi 1, notamment, dans certains cas, des défauts 11 à 16 dans une zone soudée 19 de la paroi 1, tel qu'illustré à la figure 4.

Le dispositif permet donc de détecter, identifier, dimensionner et localiser les défauts de type fissure longitudinale, corrosion, délaminage, enfoncement, soudure à effet de toit, en un seul passage dans la conduite.

De préférence, la longueur corps du dispositif est inférieure à 1,2 mètres, pour une conduite de diamètre de l'ordre de 0,5 mètres.

Pour réaliser ce type d'inspection, l'appareil intègre un certain nombre de capteurs 3, 4 dit multi-élément, et des moyens électroniques de contrôle configurés pour piloter ces capteurs 3, 4 de manière souhaitée.

Les capteurs 3, 4 multi-élément sont décomposés en éléments individuels pouvant chacun être pilotés indépendamment. Ces capteurs 3, 4 sont connectés aux moyens électroniques de contrôle pour contrôler l'émission et la réception, indépendamment et simultanément, sur chacune des voies.

Tous les éléments des capteurs ne sont pas nécessairement utilisés simultanément. Les moyens électroniques de contrôle permettent un multiplexage dynamique, pour répartir les éléments actifs parmi les éléments de chaque capteur 3, 4. Par exemple, le dispositif de l'invention peut être configuré pour permettre 32 émissions et réceptions de manière simultanée.

La souplesse de paramétrage est ainsi très large, et le dispositif obtenu présente une très grande compacité.

Comme vu ci-dessus, notamment en référence aux figures 1 et 2, Le premier groupe de capteurs 3 est dédié à la production d'ondes dites longitudinales 0°. Ce groupe de capteurs 3, répartis sur deux rangées dans notre exemple, permet notamment de contrôler la géométrie et l'épaisseur de la paroi 1 de la conduite, u moyen d'un balayage électronique et d'une focalisation électronique.

Également comme vu ci-dessus, notamment en référence aux figures 1 et 3 à 6, le deuxième groupe de capteurs 4 est dédié à la production d'ondes dites transversales d'angle de réfraction non nul, sensiblement égal à 45° dans notre exemple. Ce groupe de capteurs 4, répartis sur trois rangées dans notre exemple, permet notamment de détecter, identifier et dimensionner des fissures longitudinales dans la paroi 1 de la conduite, au moyen d'un balayage électronique, d'une focalisation électronique et d'une déflexion électronique.

De préférence, les ondes transversales produites le sont dans les deux directions, c'est-à-dire défléchies positivement ou négativement par rapport à la normal à la circonférence 2 du dispositif en le point d'émission. Ceci permet notamment de contrôler la totalité du volume d'un cordon de soudure 19 tel qu'illustré en figure 4, et d'y détecter des défauts en des points critiques 11 à 16.

Le paramétrage des lois de retard spécifiques pour la focalisation pour les capteurs 3 du premier groupe, et pour la focalisation et la déflexion pour les capteurs 4 du deuxième groupe, est adapté à la nature et aux caractéristiques des défauts 8 à 18 dans la paroi 1 que l'on souhaite pouvoir détecter, et aux caractéristiques 6, 7 de la paroi 1 que l'on souhaite vérifier.

La variation de la focalisation et de la déflexion permet donc une grande souplesse de détection et de caractérisation (par exemple : identification, dimensionnement et localisation d'une fissure circonférentielle).

Cette souplesse autorise la discrimination rapide des défauts combinés qui peuvent présenter une criticité propre.

Les capteurs 4 du deuxième groupe peuvent être de type linéaire. Alternativement, ils peuvent être de type matriciel.

Au cours du balayage électronique présenté ci-dessus, le faisceau 20, 21 est déplacé spatialement en activant séquentiellement différentes ouvertures actives correspondant chacune à un ou plusieurs émetteur et récepteur d'un capteur 3, 4 donné.

Au cours de la focalisation électronique et de la déflexion électronique, des retards électroniques sont appliqués en émission et en réception sur chacune des voies des capteurs 3, 4 correspondant, selon une loi de retard de focalisation, respectivement déflexion, paramétrée dans les moyens électronique de contrôle.

Ces retards ont un effet semblable à celui d'une lentille de focalisation, respectivement de déflexion, et permettent ainsi de focaliser à différentes profondeurs, respectivement de défléchir le faisceau 20, 21 selon différents angles. Ce type de fonctionnement est particulièrement adapté au contrôle de parois 1 épaisses ou au contrôle de paroi 1 présentant un état de surface corrodé, ou encore au contrôle de parois 1 à partir d'emplacement à très faible encombrement.

Comme évoqué ci-dessus, notamment en référence aux figures 5 et 6, le paramétrage du pas de commutation permet d'ajuster la résolution circonférentielle en fonction des caractéristiques des défauts à détecter.

Également, le nombre d'émetteurs et récepteurs regroupés, ou d'ouvertures, pour former le faisceau 20, 21 est paramétrable, ce qui permet d'ajuster la dimension de tâche focale projetée sur la paroi 1.

Un recouvrement entier de la paroi 1 de la conduite peut être ainsi obtenu, dans la direction circonférentielle, grâce à l'ensemble des émissions et réceptions ultrasonores produites et récupérées par les capteurs 3, 4, et contrôlées par les moyens électroniques de contrôle.

Les capteurs 3, 4 peuvent résister à une pression extérieure par la face avant, et offrent une herméticité qui permet de garantir une pression atmosphérique par l'arrière, où peuvent se situer les moyens électroniques de contrôle. Ces moyens électroniques de contrôle peuvent comprend une ou plusieurs cartes électroniques. Le dispositif comprend également une horloge de fréquence paramétrable, les moyens électroniques de contrôle étant configurés pour déclencher les mesures par les capteurs 3, 4 à ultrason selon cette fréquence.

Le dispositif comprend au moins un capteur de type odomètre axial 5, référencé sur la figure 1, les moyens électroniques de contrôle étant configurés pour associer les informations obtenues par les capteurs 3, 4 à ultrason aux informations de position obtenues par le ou les capteurs de type odomètre axial 5. La résolution axiale du ou des capteurs de type odomètre axial est paramétrable.

Plus précisément, le pas de mesure de position par le ou les capteurs de type odomètre axial 5 est paramétrable, les moyens électroniques de contrôle étant configurés pour déclencher les mesures par les capteurs 3, 4 à ultrason selon ce pas de mesure.

Ceci permet notamment de réaliser un profil des défauts détecter dans la conduite. De préférence, deux capteurs de type odomètre axial sont utilisés. On obtient ainsi une très haute résolution axiale qui permet de réaliser un profil encore plus fin des défauts détectés, avec une grande finesse de localisation.

Ainsi, le dispositif intègre de préférence deux moyens de déclenchement des mesures qui sont l'horloge de fréquence paramétrable évoquée ci-dessus, et le ou les capteurs de type odomètre axial dont la résolution est paramétrable, également évoqué ci-dessus.

La combinaison de ces deux moyens de paramétrage de la résolution axiale permet l'ajustement de cette résolution axiale en fonction des caractéristiques des défauts à détecter.

Le dispositif selon l'invention comprend également au moins un capteur de mesure de la célérité de propagation 22 des faisceaux d'ondes 20, 21 ultrasonores émise par les capteurs 3, 4 ultrason ou des ondes ultrasonores émises par les émetteurs des capteurs ultrason. Les moyens de contrôle sont configurés alors pour recevoir et enregistrer l'information mesurée par ce capteur de mesure de la célérité de propagation 22. On peut également prévoir plusieurs capteurs de mesure de la célérité de propagation 22 des faisceaux d'ondes 20, 21 ultrasonores.

Les informations reçues du ou des capteurs de mesure de la célérité de propagation 22 sont enregistrés par les moyens électroniques de contrôle. Ceci permet d'améliorer la précision du calcul de dimensionnement des déformations géométriques et de profondeur des fissures.

Le dispositif selon l'invention comprend aussi un transmetteur électromagnétique 23 basse fréquence qui permet de transmettre à la surface extérieure de la conduite des ondes, lorsque le dispositif est placé à l'intérieur de cette conduite. Ains, il est possible de suivre et également de détecter le dispositif dans la conduite depuis l'extérieur de cette conduire, en utilisant des antennes ou balises pour capter les ondes émises par le transmetteur 23.

De préférence également, des moyens de centrage 24 sont prévus, assurer le centrage du dispositif dans la conduite.

Dans l'exemple représenté à la figure 1, ces moyens de centrage 24 prennent la forme de roues de centrage 24.

Ces moyens de centrage 24 permettent en particulier de garantir la concentricité du support des capteurs par rapport à la conduite. Ils permettent également de garantir le maintien d'une distance suffisante entre les capteurs 3, 4 et la paroi 1 de la conduite, pour ne pas exposer ces capteurs 3, 4 à des obstacles intrusifs. Ainsi les capteurs les capteurs 3, 4 ne sont jamais au contact de la paroi 1.

En outre, on prévoit l'embarquement dans le dispositif d'un ou plusieurs capteurs de températures et d'un ou plusieurs capteurs de pression, dont les signaux sont enregistrés par les moyens électroniques de contrôle. Ceci permet de contrôler les conditions d'exploitation du dispositif dans le cadre d'une opération d'inspection. Des moyens de mesure de position angulaire sont également embarqués dans le dispositif. Ils permettent d'obtenir la position angulaire des défauts détectés, tel que l'angle et l'orientation des défauts de type cintres montants, descendants et droit ou gauche.

Comme évoqué ci-dessus, les moyens électroniques de contrôle comprennent par exemple un ensemble de différentes cartes électronique. Dans le cas de capteurs à ultrason multi-élément de type piézo-composite, les moyens électroniques de contrôle permettent notamment de produire les impulsions électriques nécessaire à la vibration de ces éléments de type piézo-composite, ainsi qu'à la réception, à l'amplification, à la filtration, et la numérisation des signaux produit par les différents échos renvoyés par la paroi 1 de la canalisation ou conduite.

Les moyens électroniques de contrôle comprennent également un ensemble de mémoire numérique qui permettent de stocker les signaux produits par les capteurs 3, 4 et les différents autres informations et données recueillies pendant l'inspection. Les différentes paramétrages, évoqués ci-dessus, des moyens électroniques de contrôle, peuvent être modifiés par une interface adaptée, par exemple par l'intermédiaire d'un ordinateur embarqué dans le dispositif. L'ordinateur permet également le contrôle, l'acquisition et l'extraction des données enregistrées.

Le dispositif est autonome. Il comprend une ou plusieurs batteries ou piles offrant une autonomie électrique suffisante pour pouvoir inspecter des conduites de grandes longueurs. De préférence, on prévoit un connecteur qui permet de connecter un compartiment externe contenant une ou plusieurs batteries ou piles additionnelles, afin d'augmenter encore l'autonomie pour l'inspection de conduites de très grande longueur. Des coupelles de guidage, de préférence en polyuréthane, permettent le guidage et l'étanchéité au cours du déplacement du dispositif dans la conduite. Ceci permet donc au dispositif d'avancer avec le fluide transporté dans la conduite, dans les deux directions.

La compacité du dispositif, grâce à l'utilisation optimisée de la technologie de type détection par capteurs ultrason multi-élément, présente de nombreux avantages. Ainsi, le poids du dispositif obtenu est suffisamment faible pour permettre une manutention et une mise en place par deux personnes dans la conduite, sans nécessiter l'utilisation d'un matériel de levage ou de manutention, tel qu'une grue ou un bras de levage, et pour permettre un transport en véhicule léger.

La présente description est donnée à titre d'exemple et n'est pas limitative de l'invention, qui est définie dans les revendications.

En particulier, l'invention ne se limite pas à un nombre spécifique d'émetteur et/ou de récepteur dans chaque capteur, de capteurs dans chaque rangée, ni de rangées de capteurs.

## Revendications

1. Dispositif d'examen de l'intérieur d'une conduite par ultrason multi-élément, consistant en :
a) un dispositif d'examen de l'intérieur d'une conduite par ultrason multi-élément, configuré pour être placé à l'intérieur d'une conduite tubulaire de transport d'un fluide,
b) le dispositif présentant une circonférence (2) et comprenant plusieurs capteurs (3, 4) à ultrason répartis sur ladite circonférence (2) et chacun formé de plusieurs émetteurs et de plusieurs antennes de réception, le dispositif comprenant également des moyens électroniques de contrôles configurés pour piloter chaque capteur (3, 4), et pour recevoir et enregistrer les informations mesurées par lesdits capteurs (3, 4), lesquels capteurs (3, 4) sont regroupés :
c) un premier groupe de capteurs (3) dont les émetteurs sont aptes à émettre une onde (20) sonore longitudinale dans une première direction d'incidence normale à la circonférence (2) en la position de l'émetteur correspondant,
d) un deuxième groupe de capteurs (4) dont les émetteurs sont aptes à émettre une onde sonore transversale (21) dans une deuxième direction d'incidence formant un angle d'incidence non nul, de préférence sensiblement égal à 45 degrés, avec la normale à la circonférence (2) en la position de l'émetteur correspondant,
e) les moyens électroniques de contrôle configurés :
e1) pour piloter individuellement chaque capteur (3, 4) du premier et du deuxième groupe, et chaque émetteur et récepteur de chacun de ces dits capteurs (3, 4), selon un programme de pilotage paramétrable et fonction des caractéristiques des défauts (8 à 18) à détecter dans la paroi (1) et/ou des caractéristiques (6, 7) de la paroi (1) à vérifier,
e2) pour appliquer à l'émission et/ou à la réception de chacun des émetteurs et/ou récepteurs:
e2a) de chaque capteur (3,4) du premier et du deuxième groupes, un retard spécifique selon une loi de retard de focalisation paramétrable, en sorte de faire varier électroniquement et de manière spécifique à chaque capteur (3, 4) la distance de focalisation du faisceau d'ondes (20, 21) émis par ledit capteur (3, 4),
e2b) de chaque capteur (4) du deuxième groupe un retard spécifique selon une loi de retard de déflexion paramétrable, en sorte de faire varier électroniquement et de manière spécifique à chaque capteur (4) l'angle d'incidence du faisceau d'ondes (21) émis par ledit capteur (4),
**caractérisé en ce que**:
f1) le dispositif est configuré pour se déplacer sous l'action du fluide transporté dans ladite conduite pour détecter des défauts (8 à 18) de la paroi (1) de ladite conduite,
f2) les moyens électroniques de contrôle sont configurés pour faire varier le nombre d'émetteurs et de récepteurs utilisés dans un capteur (3,4) donné, en sorte de faire varier la taille de la tâche focale du faisceau d'onde (20, 21) projeté par le capteur (3, 4) donné à une distance focale donnée.
et **en ce que** le dispositif comprend :
g) une horloge de fréquence paramétrable, et **en ce que** les moyens électroniques de contrôle sont configurés pour déclencher les mesures par les capteurs (3, 4) à ultrason selon ladite fréquence ;
h) au moins un capteur de type odomètre axial (5), et **en ce que** les moyens électroniques de contrôle sont configurés pour associer les informations obtenues par les capteurs (3, 4) à ultrason aux informations de position obtenues par le ou les capteurs de type odomètre axial (5) ;
i) le pas de mesure de position par le ou les capteurs de type odomètre axial (5) est paramétrable, et les moyens électroniques de contrôle sont configurés pour déclencher les mesures par les capteurs (3, 4) à ultrason selon ledit pas de mesure,
j) au moins un capteur de mesure de la célérité de propagation (22) des faisceaux d'ondes (20, 21) ultrasonores émises par les capteurs (3, 4) ultrason ou des ondes ultrasonores émises par les émetteurs des capteurs ultrason, et les moyens de contrôle sont configurés pour recevoir et enregistrer l'information mesurée par ledit capteur de mesure de la célérité de propagation (22) ;
k) un transmetteur électromagnétique (23) basse fréquence apte, lorsque le dispositif est placé à l'intérieur d'une conduite, à transmettre à la surface extérieure de ladite conduite des ondes, afin de permettre le suivi et la détection du dispositif dans la conduite depuis l'extérieur de cette conduite.

2. Dispositif selon la revendication 1, **caractérisé en ce que** les capteurs (3) du premier groupe sont répartis circonférentiellement sur une ou plusieurs, de préférence deux, rangées, et **en ce que** les moyens électroniques de contrôle sont configurés pour permettre le balayage électronique par les faisceaux d'ondes (20) émis par l'ensemble des rangées de capteurs (3) du premier groupe.

3. Dispositif selon l'une quelconque des revendications 1 ou 2, **caractérisé en ce que** les capteurs (4) du deuxième groupe sont répartis circonférentiellement sur une ou plusieurs, de préférence trois, rangées, et **en ce que** les moyens électroniques de contrôle sont configurés pour permettre le balayage électronique par les faisceaux d'ondes (21) émis par l'ensemble des rangées de capteurs (4) du deuxième groupe.

4. Dispositif selon l'une quelconque des revendications 1 à 3, **caractérisé en ce que** les capteurs (3, 4) sont pourvus d'ouvertures actives en regard de leurs émetteurs, et **en ce que** les moyens électroniques de contrôle sont configurés pour activer séquentiellement les ouvertures des capteurs (3, 4) d'une rangée donnée, pour permettre le balayage électronique.

5. Dispositif selon l'une quelconque des revendications 1 à 4, **caractérisé en ce que** les moyens électroniques de contrôle sont configurés pour permettre le balayage électronique par les faisceaux d'ondes (20, 21) émis par l'ensemble des rangées de capteurs (3, 4) selon un pas de commutation déterminé.

6. Dispositif selon les revendications 1 à 4, **caractérisé en ce que** les moyens électroniques de contrôle sont configurés pour activer séquentiellement les ouvertures des capteurs (3, 4) d'une rangée donnée selon le pas de commutation déterminé, pour permettre le balayage électronique selon une résolution circonférentielle de balayage correspondant audit pas de commutation déterminé.

7. Dispositif selon l'une quelconque des revendications 1 à 6, **caractérisé en ce qu'**il comprend des moyens de centrage (24), aptes à assurer le centrage du dispositif dans une conduite.

## Patentansprüche

1. Vorrichtung zum Prüfen des Innenraums einer Leitung durch Mehrelement-Ultraschall, bestehend in:
a) einer Vorrichtung zum Prüfen des Innenraums einer Leitung durch Mehrelement-Ultraschall, die eingerichtet ist, um im Inneren einer röhrenförmigen Leitung zur Beförderung einer Flüssigkeit angeordnet zu werden,
b) wobei die Vorrichtung einen Umfang (2) aufweist und mehrere Ultraschallsensoren (3, 4) umfasst, die auf dem Umfang (2) verteilt sind und jeweils von mehreren Sendern und mehreren Empfangsantennen gebildet werden, wobei die Vorrichtung auch elektronische Kontrollmittel umfasst, die eingerichtet sind, um jeden Sensor (3, 4) zu steuern und die von den Sensoren (3, 4) gemessenen Informationen zu empfangen und aufzuzeichnen, wobei die Sensoren (3, 4) folgenermaßen gruppiert sind:
c) in eine erste Gruppe von Sensoren (3), deren Sender geeignet sind, eine Längsschallwelle (20) in eine erste Eintrittsrichtung normal zum Umfang (2) in der Position des entsprechenden Senders zu entsenden,
d) in eine zweite Gruppe von Sensoren (4), deren Sender geeignet sind, eine quer verlaufende Schallwelle (21) in eine zweite Eintrittsrichtung, die einen Eintrittswinkel ungleich Null, vorzugsweise im Wesentlichen gleich 45 Grad, mit der Normalen auf den Umfang (2) in der Position des entsprechenden Senders bildet, zu entsenden,
e) wobei die elektronischen Kontrollmittel eingerichtet sind, um:
e1) jeden Sensor (3, 4) der ersten und der zweiten Gruppe individuell zu steuern, und jeden Sender und Empfänger jedes dieser Sensoren (3, 4) nach einem parametrierbaren Steuerungsprogramm, das von den Merkmalen der zu erfassenden Fehler (8 bis 18) in der Wand (1) und/oder den Merkmalen (6, 7) der zu überprüfenden Wand (1) abhängt, zu steuern,
e2) an die Entsendung und/oder den Empfang jedes der Sender und/oder Empfänger
e2a) jedes Sensors (3, 4) der ersten und der zweiten Gruppen eine spezifische Verzögerung nach einem Gesetz zur parametrierbaren Fokussierungsverzögerung anzulegen, um elektronisch und spezifisch für jeden Sensor (3, 4) den Fokusabstand des vom Sensor (3, 4) entsandten Wellenbündels (20, 21) zu variieren,
e2b) jedes Sensors (4) der zweiten Gruppe eine spezifische Verzögerung nach einem Gesetz zur parametrierbaren Ablenkungsverzögerung anzulegen, um elektronisch und spezifisch für jeden Sensor (4) den Eintrittswinkel des vom Sensor (4) entsandten Wellenbündels (21) zu variieren,
**dadurch gekennzeichnet, dass**
f1) die Vorrichtung eingerichtet ist, um sich unter der Wirkung der in der Leitung beförderten Flüssigkeit zu verlagern, um Fehler (8 bis 18) der Wand (1) der Leitung zu erfassen,
f2) die elektronischen Kontrollmittel eingerichtet sind, um die Anzahl von Sendern und Empfängern, die in einem gegebenen Sensor (3, 4) verwendet werden, zu variieren, um die Größe der Fokalaufgabe des Wellenbündels (20, 21), das von dem gegebenen Sensor (3, 4) in einem gegebenen Fokusabstand projiziert wird, zu variieren,
und dass die Vorrichtung umfasst:
g) einen parametrierbaren Frequenzmesser, wobei die elektronischen Kontrollmittel eingerichtet sind, um die Messungen durch die Ultraschallsensoren (3, 4) mit dieser Frequenz auszulösen;
h) mindestens einen Sensor des Typs Axialstreckenzähler (5), wobei die elektronischen Kontrollmittel eingerichtet sind, um die von den Ultraschallsensoren (3, 4) erhaltenen Informationen mit den Positionsinformationen, die von dem oder den Sensoren des Typs Axialstreckenzähler (5) erhalten werden, zu verbinden;
i) wobei der Positionsmessschritt durch den oder die Sensoren des Typs Axialstreckenzähler (5) parametrierbar ist, und die elektronischen Kontrollmittel eingerichtet sind, um die Messungen durch die Ultraschallsensoren (3, 4) mit diesem Messschritt auszulösen;
j) mindestens einen Sensor zum Messen der Ausbreitungsschnelligkeit (22) der Ultraschallwellenbündel (20, 21), die von den Ultraschallsensoren (3, 4) entsandt werden, oder der Ultraschallwellen, die von den Sendern der Ultraschallsensoren entsandt werden, wobei die Kontrollmittel eingerichtet sind, um die von dem Sensor zum Messen der Ausbreitungsschnelligkeit (22) gemessene Information zu empfangen und aufzuzeichnen;
k) einen elektromagnetischen Niederfrequenz-Transmitter (23), der geeignet ist, wenn die Vorrichtung im Inneren einer Leitung angeordnet ist, an die Außenfläche der Leitung Wellen zu übertragen, um die Verfolgung und Erfassung der Vorrichtung in der Leitung von außerhalb dieser Leitung zu ermöglichen.

2. Vorrichtung nach Anspruch 1, **dadurch gekennzeichnet, dass** die Sensoren (3) der ersten Gruppe in Umfangsrichtung auf einer oder mehreren, vorzugsweise zwei, Reihen verteilt sind, und dass die elektronischen Kontrollmittel eingerichtet sind, um die elektronische Abtastung durch die Wellenbündel (20), die von der Gesamtheit der Reihen von Sensoren (3) der ersten Gruppe entsandt werden, zu ermöglichen.

3. Vorrichtung nach einem der Ansprüche 1 oder 2, **dadurch gekennzeichnet, dass** die Sensoren (4) der zweiten Gruppe in Umfangsrichtung auf einer oder mehreren, vorzugsweise drei, Reihen verteilt sind, und dass die elektronischen Kontrollmittel eingerichtet sind, um die elektronische Abtastung durch die Wellenbündel (21), die von der Gesamtheit der Reihen von Sensoren (4) der zweiten Gruppe entsandt werden, zu ermöglichen.

4. Vorrichtung nach einem der Ansprüche 1 bis 3, **dadurch gekennzeichnet, dass** die Sensoren (3, 4) mit aktiven Öffnungen gegenüber ihren Sendern versehen sind, und dass die elektronischen Kontrollmittel eingerichtet sind, um sequenziell die Öffnungen der Sensoren (3, 4) einer gegebenen Reihe zu aktivieren, um die elektronische Abtastung zu ermöglichen.

5. Vorrichtung nach einem der Ansprüche 1 bis 4, **dadurch gekennzeichnet, dass** die elektronischen Kontrollmittel eingerichtet sind, um die elektronische Abtastung durch die Wellenbündel (20, 21), die von der Gesamtheit der Reihen von Sensoren (3, 4) entsandt werden, nach einem bestimmten Umschaltschritt zu ermöglichen.

6. Vorrichtung nach den Ansprüchen 1 bis 4, **dadurch gekennzeichnet, dass** die elektronischen Kontrollmittel eingerichtet sind, um sequenziell die Öffnungen der Sensoren (3, 4) einer gegebenen Reihe nach dem bestimmten Umschaltschritt zu aktivieren, um die elektronische Abtastung nach einer Umfangsauflösung zur Abtastung entsprechend dem bestimmten Umschaltschritt zu ermöglichen.

7. Vorrichtung nach einem der Ansprüche 1 bis 6, **dadurch gekennzeichnet, dass** sie Zentriermittel (24) umfasst, um die Zentrierung der Vorrichtung in einer Leitung zu gewährleisten.

## Claims

1. Device for examining the inside of a pipe by multi-element ultrasound, consisting of:
a) a device for examining the inside of a pipe by multi-element ultrasound, configured to be placed inside a tubular pipe for transporting a fluid,
b) the device having a circumference (2) and comprising several ultrasound sensors (3, 4) distributed over said circumference (2) and each formed of several transmitters and several receiving antennas, the device also comprising electronic control means configured to control each sensor (3, 4), and to receive and record the information measured by said sensors (3, 4), said sensors (3, 4) being grouped into:
c) a first group of sensors (3) whose transmitters are capable of transmitting a longitudinal sound wave (20) in a first direction of incidence normal to the circumference (2) at the position of the corresponding transmitter,
d) a second group of sensors (4) whose transmitters are capable of transmitting a transverse sound wave (21) in a second direction of incidence forming a non-zero angle of incidence, preferably substantially equal to 45 degrees, with the normal to the circumference (2) at the position of the corresponding transmitter,
e) the electronic control means being configured:
e1) to individually control each sensor (3, 4) of the first and second groups, and each transmitter and receiver of each of said sensors (3, 4), according to a configurable control program and depending on the characteristics of the defects (8 to 18) to be detected in the wall (1) and/or the characteristics (6, 7) of the wall (1) to be checked,
e2) to apply the following to the transmission and/or reception of each of the transmitters and/or receivers:
e2a) to each sensor (3, 4) of the first and second groups, a specific delay according to a configurable focusing delay law, so as to vary electronically and specifically for each sensor (3, 4) the focusing distance of the beam of waves (20, 21) transmitted by said sensor (3, 4),
e2b) to each sensor (4) of the second group a specific delay according to a configurable deflection delay law, so as to vary electronically and specifically for each sensor (4) the angle of incidence of the beam of waves (21) transmitted by said sensor (4),
**characterized in that**:
f1) the device is configured to move under the action of the fluid transported in said pipe to detect defects (8 to 18) of the wall (1) of said pipe,
f2) the electronic control means are configured to allow variation of the number of transmitters and receivers employed in a given sensor or (3, 4) to make it possible to vary the size of the focal spot of the beam of waves (20, 21) projected by the given sensor (3, 4) at a given focal distance.
and **in that** the device comprises:
g) a configurable frequency clock, and **in that** the electronic control means are configured to trigger the measurements by the ultrasound sensors (3, 4) according to said frequency;
h) at least one axial odometer type sensor (5), and **in that** the electronic control means are configured to associate the information obtained by the ultrasound sensors (3, 4) with the position information obtained by the axial odometer type sensor(s) (5);
i) the position measurement pitch by the axial odometer type sensor(s) (5) is configurable, and the electronic control means are configured to trigger the measurements by the ultrasonic sensors (3, 4) according to said measurement pitch,
j) at least one sensor for measuring the propagation speed (22) of the ultrasonic beam of waves (20, 21) transmitted by the ultrasonic sensors (3, 4) or of the ultrasonic waves transmitted by the transmitters of the ultrasonic sensors, and the control means are configured to receive and record the information measured by said propagation speed measurement sensor (22);
k) a low-frequency electromagnetic transmitter (23) capable, when the device is placed inside a pipe, of transmitting waves to the outer surface of said pipe, in order to allow the tracking and detection of the device in the pipe from outside the pipe.

2. Device according to claim 1, **characterized in that** the sensors (3) of the first group are distributed circumferentially on one or more, preferably two, rows, and **in that** the electronic control means are configured to allow electronic scanning by the beam of waves (20) transmitted by all the rows of sensors (3) of the first group.

3. Device according to any one of claims 1 or 2, **characterized in that** the sensors (4) of the second group are distributed circumferentially on one or more, preferably three, rows, and **in that** the electronic control means are configured to allow electronic scanning by the beam of waves (21) transmitted by all of the rows of sensors (4) of the second group.

4. Device according to any one of claims 1 to 3, **characterized in that** the sensors (3, 4) are provided with active openings facing their transmitters, and **in that** the electronic control means are configured to sequentially activate the openings of the sensors (3, 4) of a given row, to allow electronic scanning.

5. Device according to any one of claims 1 to 4, **characterized in that** the electronic control means are configured to allow electronic scanning by the beam of waves (20, 21) transmitted by all of the rows of sensors (3, 4) according to a determined switching pitch.

6. Device according to claims 1 to 4, **characterized in that** the electronic control means are configured to sequentially activate the openings of the sensors (3, 4) of a given row according to the determined switching pitch, to allow electronic scanning according to a circumferential scanning resolution corresponding to said determined switching pitch.

7. Device according to any one of claims 1 to 6, **characterized in that** it comprises centering means (24), capable of ensuring the centering of the device in a pipe.
